# EUROPÄISCHE PATENTSCHRIFT

(11) **EP 0 964 216 B1**
(45) Veröffentlichungstag und Bekanntmachung des Hinweises auf die Patenterteilung: **08.10.2003**
(21) Anmeldenummer: 99103558.5
(22) Anmeldetag: 24.02.1999
(51) Int. Cl.: F27D 3/00, F27D 3/12, B65G 25/02

(54) **Chargentransportvorrichtung für Wärmebehandlungsöfen**
Load conveyor device for heat treatment furnaces
Dispositif de transport de charges pour fours de traitement thermique

(30) Priorität: 12.06.1998 DE 19826326
(43) Veröffentlichungstag der Anmeldung: 15.12.1999
(73) Patentinhaber: ALD Vacuum Technologies Aktiengesellschaft, 63450 Hanau (DE)
(72) Erfinder: Jaschinski, Karl-Heinz, 63589 Linsengericht (DE)

(56) Entgegenhaltungen:
- EP-A- 0 473 885
- DE-A- 2 831 251
- DE-B- 1 002 016
- DE-C- 929 416
- FR-A- 611 594
- FR-A- 2 221 365
- FR-A- 2 536 726
- GB-A- 116 949

## Beschreibung

Die Erfindung betrifft eine Vorrichtung zum Beschicken bzw. zum Entladen eines Ofens zur Wärmebehandlung von Werkstücken. Hierzu werden die zu erwärmenden Werkstücke auf einem Chargenträger in die Ofenkammer hinein verbracht und mittels der Transportvorrichtung in der Ofenkammer weitertransportiert. Bekannt ist, die mit den Werkstükken beladenen Chargenträger zum Vorschub während einer Hubphase zunächst von beiderseits des Transportweges sich erstreckenden Auflagern abzuheben und in eine Vorschubposition zu überführen. Während einer anschließenden Vorschubphase werden die Chargenträger dann in Transportrichtung weiterbewegt und schließlich in einer Absenkphase wieder auf die Auflager abgesetzt. In dieser Position werden die Werkstücke in dem Ofen behandelt, insbesondere einer Wärmebehandlung unterzogen.

Die Transportvorrichtung besteht üblicherweise aus mindestens zwei übereinander angeordneten Schiebern, wobei der obere Schieber gegenüber dem unteren Schieber anhebbar ist, um die Chargenträger von den Auflagern abzuheben. Die Schieber sind zum Transport des aufliegenden Chargenträgers gemeinsam in Bewegungsrichtung verschiebbar.

Eine bekannte, gattungsgemäße Transportvorrichtung zum Einsatz in Wärmebehandlungsöfen ist in der P 28 31 251 A1 beschrieben. Diese bekannte Transportvorrichtung wird in einem Hubplattenofen eingesetzt, bei welchem die Hubplatten über eine Hubvorrichtung mittels einzelner Stempel anhebbar und dann in Transportrichtung translatorisch bewegbar sind. Nach dem Anheben der Hubplatten können diese auf einem Fahrgestell bewegt werden. Zum Anheben der Stempel ist eine Hubschiene vorgesehen, welche sich über einen Gelenkmechanismus auf einer Grundplatte abstützt und mittels eines Exzentertriebes bewegbar ist. Diese bekannte Vorrichtung weist eine komplizierte Mechanik auf, wodurch die Störungsanfälligkeit des Ofens erhöht wird. Des weiteren wird durch die Stützstempel und das Fahrgestell die Bauhöhe des Ofens erheblich vergrößert.

Der Erfindung liegt die Aufgabe zugrunde, eine Vorrichtung der eingangs genannten Art dahingehend weiterzubilden, daß die Betriebssicherheit, die Reparaturfreundlichkeit sowie eine kostengünstige Ersatzteilhaltung für die Transportvorrichtung ermöglicht wird.

Erfindungsgemäß wird diese Aufgabe durch eine Transportvorrichtung gelöst, die die im Anspruch 1 angegebenen Merkmale aufweist. Die erfindungsgemäße Transportvorrichtung zum Beschicken und zum Entleeren eines Ofens zur Wärmebehandlung von Werkstücken besteht im wesentlichen aus einem die Werkstücke unterstützenden Chargenträger, welcher durch die Ofenkammer des Ofens bewegt werden kann. Zum Weitertransport des Chargenträgers, welcher auf parallel zu dem Transportweg angeordnete Auflager abgestützt ist, sind mindestens zwei übereinander angeordnete Schieber vorgesehen, mittels welcher der Chargenträger heb- oder absenkbar ist.

Zum Vorschub des Chargenträgers wird während einer Hubphase dieser durch Anheben des oberen Schiebers zunächst in eine Vorschubposition überführt. Während einer anschließenden Vorschubphase wird der Chargenträger gemeinsam mit den Schiebern translatorisch in die gewünschte Transportrichtung verschoben und nach Erreichen der Zielposition in einer Absenkphase durch Absenken des oberen Schiebers wieder auf die Auflager abgesetzt. Wesentlich für die Transportvorrichtung ist, daß zum Absenken bzw. Anheben des oberen Schiebers dieser auf mindestens zwei auf dem unteren Schieber abgestützten und in Transportrichtung zueinander versetzt angeordneten Pendelstützen aufliegt.

Die Pendelstützen sind in in dem oberen und unteren Schieber ausgebildeten Stützlagern sowohl in Bezug zu dem oberen wie auch in Bezug zu dem unteren Schieber verschwenkbar. Durch das gleichgerichtete Verschwenken der Stützpendel entsteht eine in horizontaler und vertikaler Richtung ablaufende Bewegung des oberen Schiebers und des Chargenträgers in Bezug zum ortsfesten unteren Schieber.

Die erfindungsgemäße Transportvorrichtung weist den Vorteil auf, daß die unteren und oberen Schieber eine sehr einfache Bauform besitzen und damit kostengünstig herstellbar sind. Durch die einfache Bauform ergibt sich gleichzeitig auch vorteilhaft eine erhöhte Betriebssicherheit nicht nur der Transportvorrichtung, sondern auch des Wärmebehandlungsofens.

Die Pendelstützen sind einstückig und gemäß Patentanspruch 6 weisen die Pendelstützen eine identische Bauform auf. Diese Standardisierung der wesentlichen Antriebsteile der erfindungsgemäßen Transportvorrichtung erlaubt eine sehr kostengünstige Herstellung der Transportvorrichtung.

Die Stützlager sind direkt in dem Formkörper des unteren und oberen Schiebers ausgeformt. Das Stützlager besteht im wesentlichen aus senkrecht zur Bewegungsrichtung in den Schiebern ausgebildeten Lagerpfannen, in welchen die einzelne Pendelstütze jeweils mit ihrem endseitig angeformten Gleitprofil schwenkbar lagert. Der Querschnitt der Lagerpfanne zeigt eine asymmetrische Ausbildung der Begrenzungsflächen, welche als Anschlagflächen für die Pendelstütze dienen. Diese Anschlagflächen weisen unterschiedlich große Kippwinkel auf, wodurch die Pendelstützen in den beiden Anschlagpositionen ebenfalls unterschiedliche Anschlagwinkel einnehmen, so daß der obere Schieber in Abhängigkeit des eingestellten Anschlagwinkels unterschiedliche Hubhöhen einnimmt. Während in der einen Anschlagposition der obere Schieber den auf den Auflagern liegenden Chargenträger nicht trägt, wird der Chargenträger in der anderen Anschlagposition ausschließlich von dem oberen Schieber unterstützt.

Weitere vorteilhafte Merkmale der erfindungsgemäßen Transportvorrichtung sind in den Unteransprüchen angegeben.

Die Erfindung wird nachfolgend anhand eines bevorzugten und in Zeichnungen dargestellten Ausführungsbeispiels näher erläutert. Es zeigen:
- Fig. 1: eine Stirnseitenansicht einer erfindungsgemäßen Transportvorrichtung in zwei verschiedenen Hubstellungen;

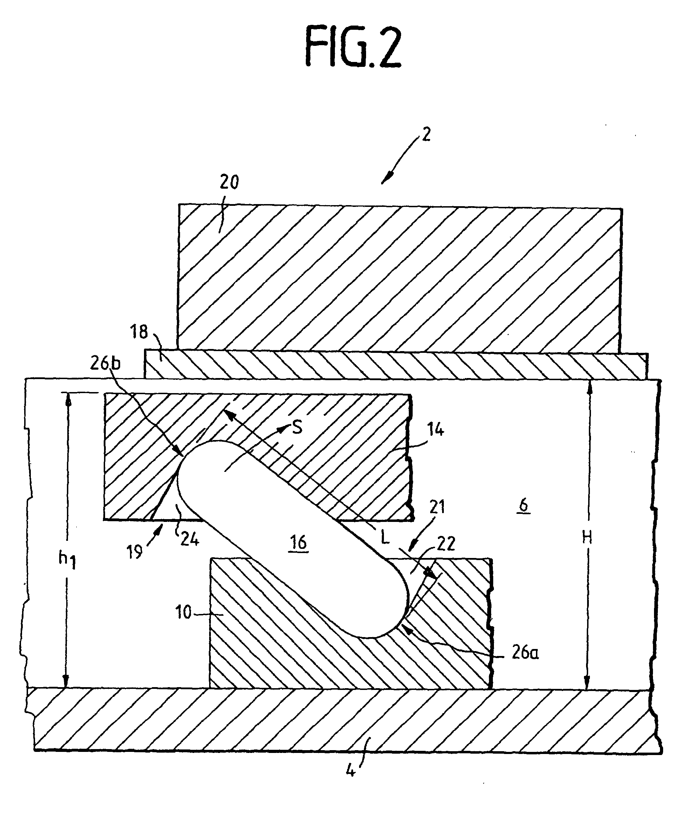

- Fig. 2: einen Teilschnitt einer Seitenansicht der in Fig. 1 dargestellten Transportvorrichtung mit in Ruheposition lagerndem oberen Schieber;
- Fig. 3: Seitenansicht der in Fig. 1 dargestellten Transportvorrichtung in Vorschubposition im Teilschnitt;
- Fig. 4: die in Fig. 1 dargestellte Transportvorrichtung im Längsschnitt in Rückschubposition im Teilschnitt;
- Fig. 5a: Seitenansicht der in Fig. 1 dargestellten Transportvorrichtung in schematischer Darstellung während der verschiedenen Phasen der Vorschubbewegung;
- Fig. 5b: Seitenansicht der in Fig. 1 dargestellten Transportvorrichtung in drei verschiedenen, aufeinanderfolgenden Phasen der Rückschubbewegung.

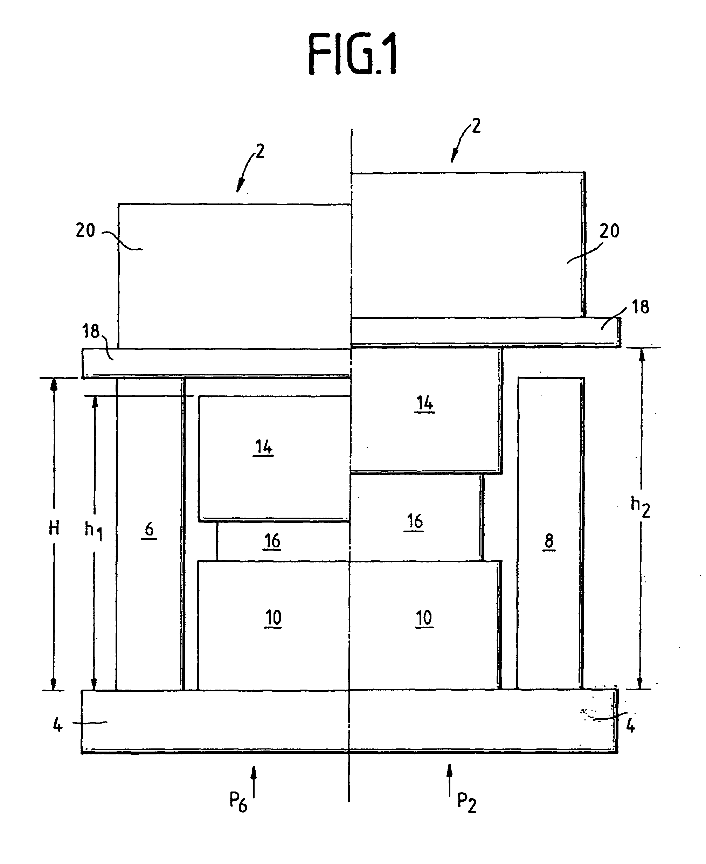

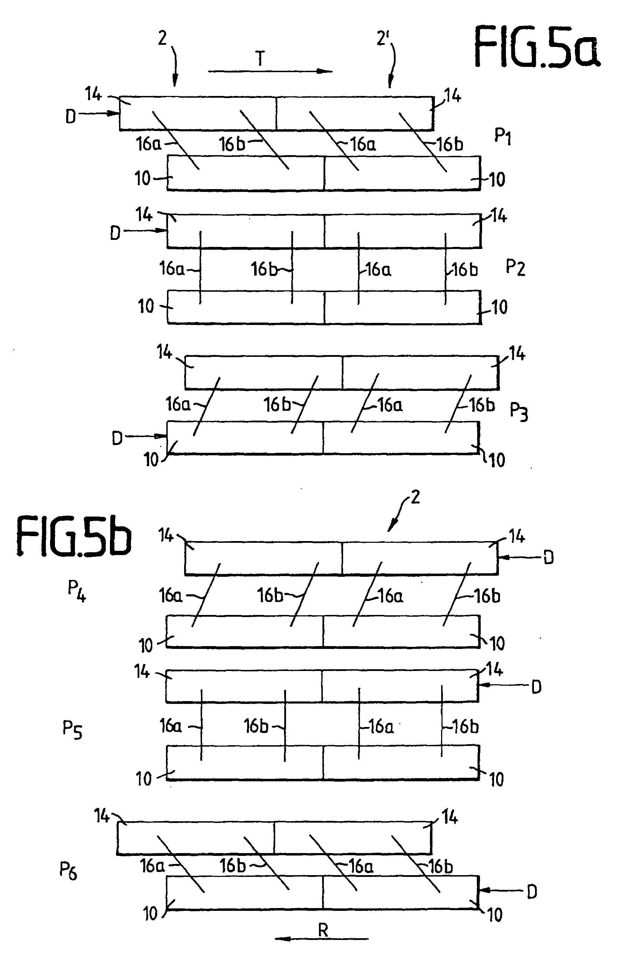

In Fig. 1 ist die Transportvorrichtung 2 in der Absenkphase P₆ und der Hubphase P₂ gegenübergestellt. Die Transportvorrichtung 2 besteht im wesentlichen aus einem auf einer Ofenkanalsohle 4 aufliegenden unteren Schieber 10, dem oberen Schieber 14, welcher auf Pendelstützen 16,16a-d (siehe Fig. 5a,5b) auf dem unteren Schieber 10 aufliegt. Die in den Wärmebehandlungsofen zu transportierenden Werkstückchargen 20 liegen auf Chargenträgern 18 auf und werden zusammen mit diesen in den in den Figuren nicht dargestellten Ofenraum hinein- bzw. hinaustransportiert. Die Chargenträger 18 liegen, wie z. B. der Fig. 1 zu entnehmen ist, in der Ruhephase P₆ auf beidseitig zu den Schiebern 10,14 und parallel zur Vorschubrichtung T bzw. Rückschubrichtung R (siehe Fig. 5a,5b) sich erstreckenden Ofenrosten 6,8 auf. Bei den in dem Wärmebehandlungsofen zu erwärmenden Werkstücken 20 handelt es sich z. B. um solche Werkstücke 20, die bei Unterdruck, in Schutzgasatmosphäre oder in einer reaktiven Prozeßgasatmosphäre einer Wärmebehandlung auszusetzen sind. Entsprechend den durch den Wärmebehandlungsprozeß auf die Werkstückchargen 20 wie aber auch auf die Teile der Transportvorrichtung 2 einwirkenden reaktiven Behandlungsstoffen bestehen die für die Vorschubvorrichtung 2 verwendeten Werkstoffe aus Stahllegierungen, refraktären Metallen, technischen Keramiken oder Graphit. Diese Werkstoffe bieten eine ausreichende thermische oder chemische Widerstandsfähigkeit gegenüber den materialbelastenden Einwirkungen der Wärmebehandlungsprozesse.

Zum Beschicken des Wärmebehandlungsofens mit Werkstückchargen 20 wird der Chargenträger 18 durch eine abfolgende und kombinierte Hub- und Schubbewegung der Schieber 10,14 und der Pendelstützen 16,16a-d entlang der Vorschubrichtung T (siehe Fig. 5a) transportiert. Hierzu wird der untere Schieber 14 (siehe Fig. 5a) z. B. mittels eines in Richtung der Vorschubrichtung T an dem oberen Schieber 14 stirnseitig einen Druckschub D ausübenden und in den Figuren nicht dargestellten Druckstempels in die Hubphase P₂ überführt. Die Pendelstützen 16,16a,16b werden bei diesem Hubvorgang in Bezug zu dem oberen und unteren Schieber 10,14 verschwenkt. Hierbei vollzieht der obere Schieber 14 gleichzeitig eine Kombination aus horizontal und vertikal gerichteter Translationsbewegung. Der vom oberen Schieber 14 effektiv durchlaufene Hub beträgt Δh = h₂ - h₁ (siehe Fig. 1).

Bei der vertikal gerichteten Aufwärtsbewegung lastet der Chargenträger 18 in der Hubphase P₂ ausschließlich auf dem oberen Schieber 14. Mit den aufliegenden Chargenträgern 18 wird der obere Schieber 14 in eine stabile Lage, nämlich die in Fig. 5a mit P₃ bezeichnete Vorschubphase verschwenkt. Hierbei wird der obere Schieber 14 gegenüber der in der Vorschubphase P₂ eingenommenen Höhenposition leicht abgesenkt, jedoch ohne daß der Chargenträger auf den Auflagern 6,8 aufliegt. Die von den Auflagern 6,8 entkoppelten Chargenträger 18 werden in der anschließenden Vorschubphase P₃ (siehe Fig. 5a) durch horizontal z. B. mit einem Stempel auf den unteren Schieber ausgeübten horizontalen Druckschub D in dem Ofenkanal in Vorschubrichtung T geschoben. Wie in Fig. 5a dargestellt, wird der Druckschub D durch die stirnseitig aneinander liegenden Transportvorrichtungen 2,2' übertragen, so daß sämtliche in dem Ofenkanal befindlichen, benachbart zueinander angeordneten Transportvorrichtungen 2,2' gleichzeitig in Vorschubrichtung T transportiert werden.

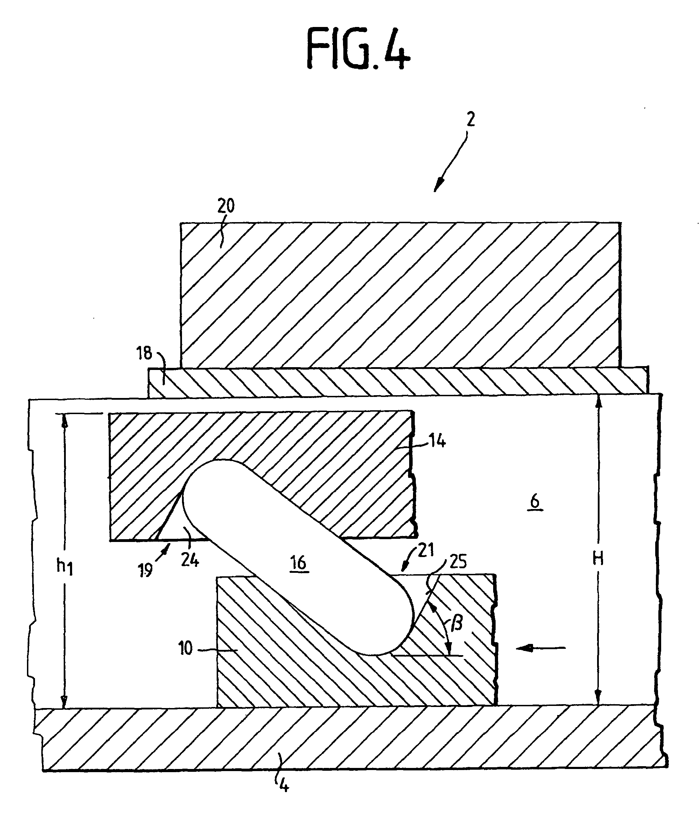

Zum Absenken der Chargenträger 18 wird der obere Schieber 14 durch stirnseitig auf diesen ausgeübten Druckschub D, z. B. eines Druckstempels, aus der Vorschubphasenposition P₄ zunächst in die Hubposition P₅ überführt. In der anschließenden Absenkphase P₆ lagern die Chargenträger 18 dann auf den Auflagern 6,8 (siehe Fig. 5b) auf. Die nunmehr lastfreie Transportvorrichtung 2,2' wird durch weiter auf den unteren Schieber 10 stirnseitig ausgeübten Druckschub D in ihre Ausgangsposition zurückgeschoben (siehe Fig. 4), um für einen weiteren Hebe- und Vorschubzyklus zur Verfügung zu stehen.

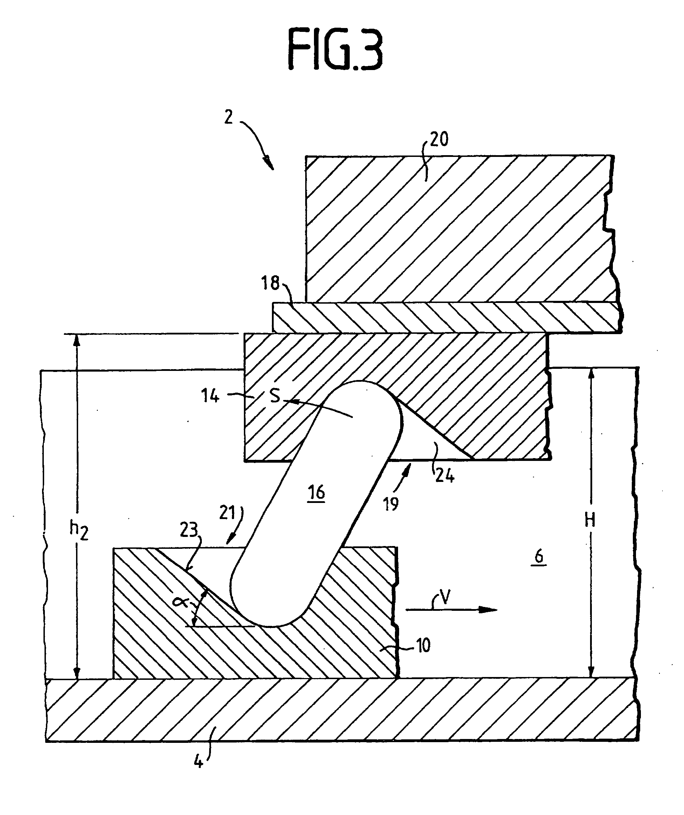

Die Pendelstütze 16 besteht, wie in den Figuren 3,4 dargestellt, aus einstückigen, massiven Profilkörpern, welche in Stützlagern 19,21 einliegen. Die Stützlager 19,21 werden durch jeweils in dem unteren und oberen Schieber 10,14 ausgeformten Lagerpfannen 22,24 gebildet. Die Lagerpfannen 22,24 weisen zwei im wesentlichen senkrecht zueinander orientierte Anschlagflächen 23,25 auf, an welchen die einzelnen Pendelstützen 16 in der Ruhephase P₁ bzw. der Vorschub- und Rückschubphase P₃, P₄ anschlägt. Durch das Eigengewicht des oberen Schiebers 14 und der auf diesem lastenden Chargenträger 18 mit aufliegenden Werkstückchargen 20 ist gewährleistet, daß in der Ruhephase P₁ und der Vorschub- bzw. Rückschubphase P₃ bzw. P₄ der obere Schieber 14 eine stabile Lage in Bezug zum unteren Schieber 10 einnimmt.

Durch die Wahl der Hebellänge L der Pendelstütze 16 und der Flächenwinkel α,β (siehe Fig. 3,4) kann die Vorschubeinrichtung 2 in einfacher Weise an vorhandene, unterschiedliche Höhen H von in Ofenkanälen befindlichen Auflagern 6,8 angepaßt werden. Durch einen Austausch der Pendelstütze 16 kann so z. B. die Transportvorrichtung 2 auch in unterschiedlich dimensionierten Wärmebehandlungsöfen vorteilhaft eingesetzt werden.

### Bezugszeichenliste

- 2,2': Transportvorrichtung, Hubmodul
- 4: Ofenkanalsohle
- 6: Ofenrost, Auflager
- 8: Ofenrost, Auflager
- 10: unterer Schieber
- 14: oberer Schieber
- 16,16a,b: Pendelstütze
- 18: Chargenträger
- 19: Stützlager
- 20: Charge, Werkstück
- 21: Stützlager
- 22: Lagerpfanne
- 23: Anschlagfläche
- 24: Lagerpfanne
- 25: Anschlagfläche
- 26a,b: Gleitprofil

- D: Druckschub
- h₁,h₂,h₃: Schieberhöhe
- L: Hebellänge
- R: Rückschubrichtung, Transportrichtung
- S: Schwenkrichtung
- T: Vorschubrichtung, Transportrichtung

- P₁: Ruhephase, Ruhelage
- P₂: Hubphase
- P₃: Vorschubphase
- P₄: Rückschubphase
- P₅: Hubphase
- P₆: Ruhephase, Absenkphase

- α: Flächenwinkel, Absenklagenwinkel
- β: Flächenwinkel, Hublagenwinkel

## Patentansprüche

1. Transportvorrichtung zum Beschicken und zum Entleeren eines Ofens zur Wärmebehandlung von Werkstücken, wobei die Werkstücke auf Chargenträgern (18) durch eine Ofenkammer des Ofens bewegt werden, und wobei die Chargenträger zum Vorschub während einer Hubphase von sich beiderseitig und parallel zu dem Transportweg erstreckenden Auflagern (6, 8) abgehoben und in eine Vorschubposition überführt werden und während einer anschließenden Vorschubphase translatorisch in Transportrichtung (T) bewegt werden und anschließend in einer Absenkphase wieder auf die Auflager abgesetzt werden, wobei zwischen den Auflagern mindestens zwei übereinander angeordnete Schieber (10, 14) vorgesehen sind, und wobei der obere Schieber (14) gegenüber dem unteren Schieber (10) anhebbar ist, um die Chargenträger von den Auflagern abzuheben, und wobei die Schieber gemeinsam zum Transport der Chargenträger in Transportrichtung verschiebbar sind und zwischen den Schiebern (10, 14) mindestens zwei in Transportrichtung (T) zueinander versetzt angeordnete Pendelstützen (16, 16a, 16b, 16c, 16d) vorgesehen sind, welche schwenkbar in oder an den zueinander benachbarten Schiebern (10, 14) angelenkt sind, wodurch eine kombinierte, in horizontaler und vertikaler Richtung ablaufende Bewegung des oberen Schiebers (14) in Bezug auf den unteren Schieber (10) ermöglicht wird und den Pendelstützen (16, 16a - d) Lagerpfannen (22, 24) an den Schiebern (10, 14) zugeordnet sind die Stützlager bilden, wobei die Lagerpfannen (22, 24) zwei sich senkrecht zur Transportrichtung (T, R) erstreckenden Anschlagflächen (23, 25) aufweisen, an welchen die Pendelstützen (16, 16a - d) jeweils in der Ruhephase (P1, P6) oder der Vorschub- bzw. Rückschubphase (P3, P6) wechselseitig und unter jeweils unterschiedlichen Kippwinkeln (α, β) anliegen und in welchen der obere Schieber (14) jeweils unterschiedliche Lagerhöhen (h1, h2) einnimmt.

## Claims

1. A conveying device for charging or emptying a furnace for heat treatment of workpieces, wherein the workpieces are moved through a furnace chamber of the furnace on batch carriers (18) and wherein, for forward travel, the batch carriers are raised during a lifting phase by supports (6, 8) extending on both sides of and parallel to the conveying path and transferred into a forward travel position and, during a subsequent forward travel phase, are moved translationally in the conveying direction (T) and subsequently set down on the supports again in a lowering phase, wherein at least two pushers (10, 14) arranged one above the other are provided between the supports, and wherein the upper pusher (14) may be raised relative to the lower pusher (10), in order to raise the batch carriers from the supports, and wherein the pushers may be displaced jointly to convey the batch carriers in the conveying direction and at least two pendulum supports (16, 16a, 16b, 16c, 16d) offset relative to one another in the conveying direction (T) are provided between the pushers (10, 14), which pendulum supports (16, 16a, 16b, 16c, 16d) are coupled swivellably in or on the mutually adjacent pushers (10, 14), thereby allowing a combined horizontal and vertical movement of the upper pusher (14) relative to the lower pusher (10), and bearing cups (22, 24) on the pushers (10, 14) are associated with the pendulum supports (16, 16a-d) and form support bearings, wherein the bearing cups (22, 24) comprise two stop faces (23, 25) extending perpendicularly to the conveying direction (T, R), against which stop faces (23, 25) the pendulum supports (16, 16a-d) each rest alternately in the rest phase (P1, P6) or the forward travel or backward travel phase (P3, P6) respectively at in each case different tilt angles (α, β) and in which the upper pusher (14) in each case adopts different elevations (h1, h2).

## Revendications

1. Dispositif de transport pour charger et vider un four de traitement thermique de pièces, dans lequel les pièces sont déplacées sur des supports de charge (18) à travers une chambre du four, et dans lequel les supports de charge sont soulevés par deux bras (6, 8) s'étendant de part et d'autre et parallèlement au chemin de transport en vue de leur avancement pendant une phase de levage et sont transférés dans une position d'avancement et sont déplacés en translation dans le sens de transport (T) pendant une phase d'avancement qui suit, et sont ensuite à nouveau déposés sur les bras au cours d'une phase de descente, avec entre les bras au moins deux coulisseaux (10, 14) disposés l'un au-dessus de l'autre, et dans lequel le coulisseau supérieur (14) peut être soulevé par rapport au coulisseau inférieur (10), pour soulever les supports de charge à partir des bras, les coulisseaux pouvant être déplacés en commun pour le transport des supports de charge dans le sens du transport, et avec entre les coulisseaux (10, 14) au moins deux appuis oscillants (16, 16a, 16b, 16c, 16d) décalés l'un par rapport à l'autre dans le sens du transport (T), qui peuvent pivoter ou qui sont articulés sur les coulisseaux (10, 14) voisins l'un de l'autre, ce qui permet un mouvement combiné, exécuté en direction horizontale et verticale, du coulisseau supérieur (14) par rapport au coulisseau inférieur (10), et avec des crapaudines (22, 24), qui forment des paliers d'appui, associées sur les coulisseaux (10, 14) aux appuis oscillants (16, 16a-d), les crapaudines (22, 24) présentant deux faces de butée (23, 25) qui s'étendent perpendiculairement à la direction de transport (T, R), et sur lesquelles les appuis oscillants (16, 16a-d) s'appliquent alternativement d'un côté et de l'autre respectivement dans la phase de repos (P1, P6) ou dans la phase d'avancement ou de retour (P3, P6) et sous des angles d'inclinaison chaque fois différents (α, β), et dans lesquelles le coulisseau supérieur (14) occupe respectivement des hauteurs d'appui différentes (h1, h2).
